# EUROPEAN PATENT APPLICATION

(11) **EP 4 361 841 A1**
(43) Date of publication of application: **01.05.2024**
(21) Application number: 23203362.1
(22) Date of filing: 13.10.2023
(51) Int. Cl.: G06F 16/28

(54) **DATA OBJECT MANAGEMENT USING DATA OBJECT CLUSTERS**

(30) Priority: 24.10.2022 US 202217972138
(71) Applicant: SAP SE, 69190 Walldorf (DE)
(72) Inventor: Buchmann, Daniel, 69190 Walldorf (DE)
(74) Representative: Müller-Boré & Partner Patentanwälte PartG mbB

(57) **Abstract**

Techniques and solutions for defining clusters of data objects are provided. An anchor data object for the cluster is determined. The anchor data object is associated with a semantic concept. Other data objects included in the cluster are also associated with the semantic concept. One or more data objects that are related to the anchor data object are added to the cluster. Additional data objects, related to the one or more other data objects, or to other data objects of the additional data objects, are added to the cluster. The cluster is associated with a name, which can be used to identify data objects that are part of the cluster. The cluster can be used for a variety of purposes, including defining a replication task, for the creation of an application program interface, or for defining a deployment task that deploys at least a portion of cluster data objects.

## Description

### FIELD

The present disclosure generally relates to data objects, such as data object definitions in a data model or instances thereof. Particular implementations provide for the definition or use of clusters of data objects having a semantic relationship.

### BACKGROUND

Ever increasing amounts of data are becoming available, from an increasing variety of sources. Data associated with a specific purpose, such as a specific analog-world entity, is typically associated with metadata that describes the data. For example, a ten-digit integer might be data, but without metadata, it may be difficult to know what the ten-digit integer represents - a phone number, a driver's license number, a password, etc. Thus, using and making "sense" of data can be highly dependent on having the correct metadata to provide context to the data.

A database or other data source associated with a complex endeavor, such as the operation of a business entity, can involve thousands of table types, and billions of records. Adding to the complexity, tables or other data objects can reference each other. At least some data objects can have relationships of various types that can be tracked to differing degrees by software systems. However, some data objects lack relationships, or at least relationships that are easily tracked, and in general it can be difficult to organize collections of data objects. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Techniques and solutions for defining clusters of data objects are provided. An anchor data object for the cluster is determined. The anchor data object is associated with a semantic concept. Other data objects included in the cluster are also associated with the semantic concept. One or more data objects that are related to the anchor data object are added to the cluster. Additional data objects, related to the one or more other data objects, or to other data objects of the additional data objects, are added to the cluster. The cluster is associated with a name, which can be used to identify data objects that are part of the cluster. The cluster can be used for a variety of purposes, including defining a replication task, for the creation of an application program interface, or for defining a deployment task that deploys at least a portion of cluster data objects.

In one aspect, the present disclosure provides a method for defining a cluster. A request is received to identify data objects in a cluster. The cluster is associated with an anchor data object. The data objects are members of a first plurality of data objects.

A data object to serve as the anchor data object is determined. The anchor data object is associated with a semantic context. Other members of the cluster are also associated with the semantic context.

A first data object is determined that has a relationship to the anchor data object. The first data object is added to the cluster. A second data object having a relationship to the anchor data object or the first data object is determined. The second data object is added to the cluster. A name is assigned to the cluster.

The present disclosure also includes computing systems and tangible, non-transitory computer readable storage media configured to carry out, or including instructions for carrying out, an above-described method (or operations). As described herein, a variety of other features and advantages can be incorporated into the technologies as desired.

### BRIEF DESCRIPTION OF THE DRAWINGS

FIG. 1 is a diagram of a database schema showing technical relationships between at least a portion of database tables in the schema.
FIG. 2 is a schematic diagram illustrating relationships between table elements that can be included in a data dictionary, or otherwise used to define database tables.
FIG. 3 a schematic diagram illustrating components of a data dictionary and components of a database layer.
FIG. 4 is code for an example metadata model for a database view of a virtual data model.
FIG. 5 is code for an example metadata model for a view of a virtual data model, and for metadata models which modify or refer to such example metadata model.
FIG. 6 is a diagram of a computing environment illustrating how a virtual data model can interact with a database system.
FIG. 7 is a block diagram depicting a schema for a logical data object.
FIG. 8 is a diagram illustrating how different data objects in one or more data models can be related, including relationships between data objects at different software or modelling layers, and relationships between data objects in the same software or modelling layer.
FIG. 9 is a diagram of a data model having different versions of a data object, and providing an example of information that can be maintained in a definition of a data object, or otherwise associated with a data object, and used for cluster formation or in a cluster definition.
FIG. 10 is a diagram illustrating an example collection of data objects and FIG. 11 provides example cluster definitions that can be produced from the collection of data objects of FIG. 10.
FIG. 12 is a flowchart of a disclosed technique for defining a cluster of data objects.
FIG. 13 is a diagram of an example computing system in which some described embodiments can be implemented.
FIG. 14 is an example cloud computing environment that can be used in conjunction with the technologies described herein.

### DETAILED DESCRIPTION

### Example 1 - Overview

Ever increasing amounts of data are becoming available, from an increasing variety of sources. Data associated with a specific purpose, such as a specific analog-world entity, is typically associated with metadata that describes the data. For example, a ten-digit integer might be data, but without metadata, it may be difficult to know what the ten-digit integer represents - a phone number, a driver's license number, a password, etc. Thus, using and making "sense" of data can be highly dependent on having the correct metadata to provide context to the data.

A database or other data source associated with a complex endeavor, such as the operation of a business entity, can involve thousands of table types, and billions of records. Adding to the complexity, tables or other data objects can reference each other. At least some data objects can have relationships of various types that can be tracked to differing degrees by software systems. However, some data objects lack relationships, or at least relationships that are easily tracked, and in general it can be difficult to organize collections of data objects.

Often, many data objects, which can be at one or more "software" or "data" layers (such as high-level logical data objects that can reference data object in a virtual data model, where data objects in the virtual data model can in turn reference data objects in a database, such as tables or views of a relational database), relate to a common semantic concept, purpose, or workflow. For instance, many data objects may be involved in a human resources software application. Human resources itself can have a variety of subtopics, where some subtopics may reference data objects that are common to other subtopics, but where other data objects are not relevant to a given subtopic.

How data is organized or maintained, including tracking of relationships between data objects, can affect whether/how easily related data objects can be identified. As an example, it may be useful to employ a high-level data object as a way to organize data objects, since that might represent a "broadest" use of data from a variety of more specific data objects, which can be at a lower level. However, objects other than the high-level object might not "know" that they are referenced by the high-level object, or that they have some type of relationships or commonality based on their use with the high-level object.

As an example of how a lack of "organization" or knowledge about a semantically (or otherwise) related set of data objects can be problematic, consider data replication. If a data object is marked for replication, it may be likely that other data objects should also be replicated. However, some objects that should be replicated may not have a direct, or easily visible, relationship with the object that was identified. So, if a set of objects is to be replicated, it could be that multiple, or perhaps even all such objects need to be manually marked for replication. This requirement can be both time consuming and error prone.

For example, manually setting data objects for replication may require both a level of knowledge of what data objects are related and a level of technical knowledge. It may be difficult for any particular individual to fully understand what data objects are related, and so mistakes can be made, such as omitting a data object from replication that should have been replicated. Even if someone understands relationships between data objects, they may not have knowledge or permission to change the replication status of data objects, and those who have the knowledge and permission may not understand what data objects should be marked for replication.

As another example, those who work with one layer of data objects may be different than those who work with data objects in other levels, and so, for example, someone working at the level of database objects may not understand how those objects are referred to in a virtual data model, or in logical data objects that reference data objects of the virtual data model. Further, those working in one level may not even be able to view data objects at a different level, such as when users of higher-level objects only interact with lower-level objects through a specific interface, which may not allow them to view details of lower-level data objects, or alter their characteristics (at least not outside of any ways specifically enabled through the interface).

As a somewhat related example, consider an API that is to provide access to data. Implementing APIs for individual data objects can be time consuming and error prone. It can also increase the use of computing resources, since obtaining data from multiple data objects may require multiple calls to an API or a set of APIs. If it was known what data objects were related, and subject to data requests for a particular purpose, a single API could be constructed allowing access to multiple data objects, easing access to the data objects to external users/processes, and saving computing resources since fewer API calls may be needed, and in some cases reducing access to a single API call.

Similar considerations as discussed for APIs apply in other scenarios, such as importing metadata from a system with the data objects into another system. In another scenario, it can be useful to provide a user or process with information about related data objects, including to reduce the chance of creating overlapping or duplicative data objects. For example, a particular dimension could be used in a variety of OLAP cubes. Having information about relationships between an OLAP cube and its constituent dimensions can help eliminate the creation of a duplicate dimension to be used in a different cube, reducing storage and processing requirements. In addition, in many cases a dimension itself refers to multiple data objects. It can be useful to know when a cube or any of its constituent data objects have changed, such as being able to identify cubes that may be affected by a change to a dimension or one of the data objects referenced by the dimension.

As a final example, consider software deployment scenarios. In a similar manner as with replication, it can be difficult to know what data objects should be deployed to enable a particular computing process. Deploying unneeded objects can waste storage, processing, and transmission resources. However, not deploying needed objects can lead to runtime errors. Disclosed techniques help provide that an accurate set of data objects can be identified and deployed.

In view of the above issues identified by Applicant, room for improvement exists.

The present disclosure provides for "clusters" of data objects that can help address the issues noted above, among other uses. A cluster of data objects refers to a group of data objects that have a relationship, where the relationships can be limited in one or both of type and "degree." For example, it can be specified that some types of relationships are or are not relevant, or limits can be set on an amount of indirection, where data objects that are not "closely" enough related are not included in a cluster. These and additional rules can be combined, such as only following a particular relationship for a particular level of indirection, where other relationships may be subject to a different limit or not be limited at all.

An advantage of clustering is that it can group data objects that may not have a technical relationship, or at least a technical relationship that is typically tracked/made available for end users. For example, a logical data object (as will be further described) may be defined with respect to multiple lower-level objects, but where the lower-lever objects are not directly related to one another. Or, some data objects may not have any technical relationship at all, but it may be useful to perform certain actions with respect to the data objects as a group.

Clusters can be defined manually, automatically, or a combination thereof. In an example of automatic cluster definition, an anchor data object can be selected or identified, and relationships from the anchor data object tracked to progressively lower-level data objects. However, in other cases an anchor data object need not be at a highest level, and generating a cluster definition can include tracking relationships at a same level as the anchor data object, at a level lower than the anchor data object, or at a level higher than the anchor data object. Automatic cluster definition can use various rules, such as logic to determine what relationships to follow and technical details about how to follow them, as well as the rules discussed above that can be used to filter or limit the type of relationships that should be considered.

Clusters can also be defined manually, such as through a user interface that allows a user to create, update, or delete clusters. The user interface can provide information about data objects at various levels, attributes of the data objects, or relationships between data objects.

In a particular schema, there can be multiple anchor objects and multiple clusters. Typically, a given data object can be a member of multiple clusters. Information about cluster membership can be stored in a definition of a data object, externally to the data object, or both. In the case where data regarding cluster membership is stored in a data object, the data object can include information such as a cluster identifier or a cluster path that identifies related data objects in a path to an anchor object. In the event the data object is a member of multiple clusters, that information can be maintained in an array, or by having a series of annotations that define various cluster memberships.

As an example of how data about cluster membership can be stored externally to a data object of the cluster, a table can be defined that includes an attribute for a data object identifier, an attribute for a cluster identifier, and optionally one or more attributes that define a path from the data object to an anchor data object. If desired, in addition to identifying higher-level data objects (or, otherwise a path to an anchor data object), cluster information can identify one or more lower-level objects, such as where for a given data object information about a subsequent data object in a hierarchy can be maintained along with information about a preceding data object in the hierarchy.

Disclosed techniques can improve a variety of computing processes, including the replication, API, and deployment scenarios described above. Not only can these techniques ease the creation of these scenarios, they can also make the resulting processes more accurate, and functional. For example, operations may not be functional or consistent if all necessary data objects are not available as replicas, in data obtained via an API, etc. In the absence of the techniques, definition may be more difficult, as suitable metadata may not be available to define clusters in another manner, or the metadata may be difficult to understand and to use in cluster definition.

Examples 2-8 discuss different types of data objects and relationships between data objects. Examples 9-16 discuss innovative techniques for defining and using data object clusters according to the present disclosure.

### Example 2 - Example Database Schema with Technical Relationships

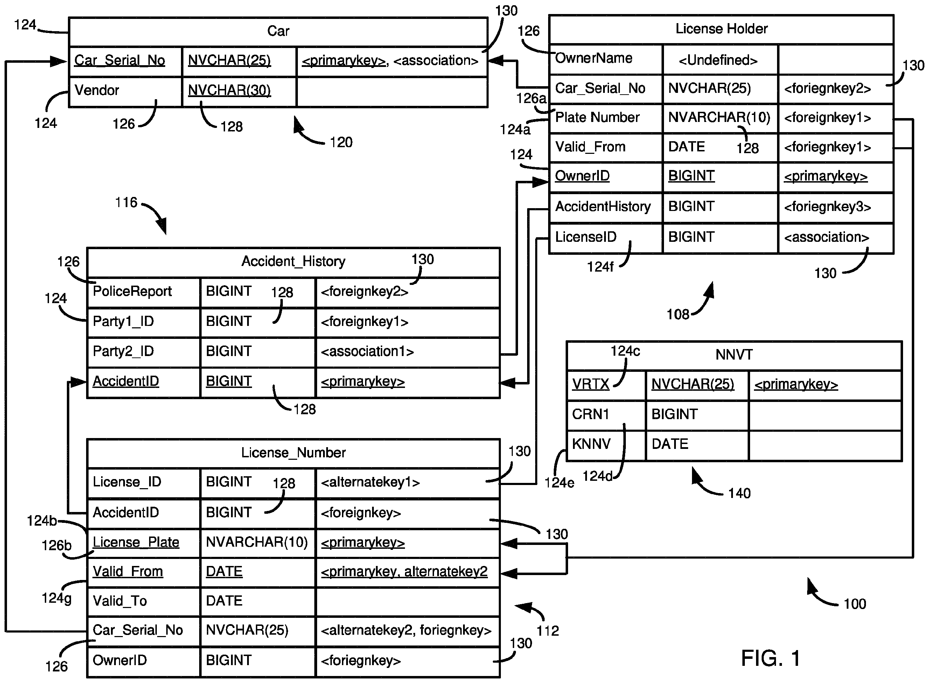

FIG. 1 is an example entity-relation (ER) type diagram illustrating a data schema 100 related to a driver's accident history. The schema 100 (which can be part of a larger schema, the other components not being shown in FIG. 1) can include a table 108 associated with a license holder (e.g., an individual having a driver's license), a table 112 associated with a license, a table 116 representing an accident history, and a table 120 representing cars (or other vehicles).

Each of the tables 108, 112, 116, 120 can include a plurality of fields 124. Each field 124 can be associated with technical information, such as a name or identifier 126, a datatype 128, and a flag or status indicator 130 indicating whether the field represents a primary key, indicates a foreign key relationship with another table, or indicates another type of technical relationship with another table. The flag 130 represents technical information that can be used to link two or more tables, including linking particular fields 124 of particular tables. The status indicator 130 can be an indicator of an inherent relationship between two tables (or, more generally, between two database objects).

Schema information with technical information is typically maintained in a database layer, such as a software layer associated with where table values are maintained (e.g., in a RDBMS), and typically includes identifiers for the tables 108, 112, 116, 120, and the name 126 and datatype 128 of their associated fields 124. Schema information may also include at least some of the information conveyable using the flag 130, such as whether a field is associated with a primary key, or indicating a foreign key relationship. However, other relationships, including more informal associations, may not be included in a schema associated with a database layer (e.g., the INFORMATION_SCHEMA of PostgreSQL).

Database layer schema information typically does not include semantic information. Although, in the particular example shown, the fields 124 have names 126 that at least suggest the meaning of their content, in many database schemas, the fields do not have names which convey the meaning of a field. In any event, fields 124 having the same semantic information, or having at least some semantic information in common, may have different technical information. For example, field 124a has the name 126a of "Plate Number," which may or may not have the same semantic meaning as field 124b with the name 126b of "License Plate." A search of the database for information regarding "License Plate" may retrieve records associated with name 126b, but may miss records with the name 126a. The converse can also be true, where a search for "License Plate" may retrieve records from two tables, even though the term has different semantic meanings in the two fields. That is, two fields may have the same name by coincidence (or through a design that simply is not concerned about such redundancies).

Apart from missing some records that have overlapping or identical semantics, or retrieving records with different semantics, there is the question of how potentially relevant tables should be located. As discussed above, especially for large, complex database systems, it can be difficult for any particular user to be fully aware of the entire database schema. Technical users may have a better understanding of the technical nature of the database, but may lack insights into the meaning, or semantic information, of the data, in order to retrieve appropriate data from the database. Similarly, non-technical users may understand what information they want, but not how to get it, including not understanding the database schema or query languages. Although it may be possible to find some semantically related tables through technical relationships, such as foreign key relationships, such a search may fail to find some related tables, as well as, as discussed above, falsely identifying tables as being semantically related simply are technically related.

FIG. 1 includes a table 140. The table 140 does not have a technical relationship with any other table in the portion of the schema 100 shown in FIG. 1. In addition, the fields 124c-124e have names that do not readily convey their meaning or purpose, or indicate whether they might have the same meaning or purpose as other fields 124 in the schema 100. For instance, field 124c may have the same semantic meaning as field 124a, field 124d may have the same meaning as field 124f, and field 124e may have the same meaning as field 124g. Thus, a search for field 124d may miss results in table 140, as it may not be known that table 140 should be searched, and, based on the different field names 126, the results in table 140 would be missed even if table 140 were included in the search.

### Example 3 - Example Table Elements Including Semantic Identifiers

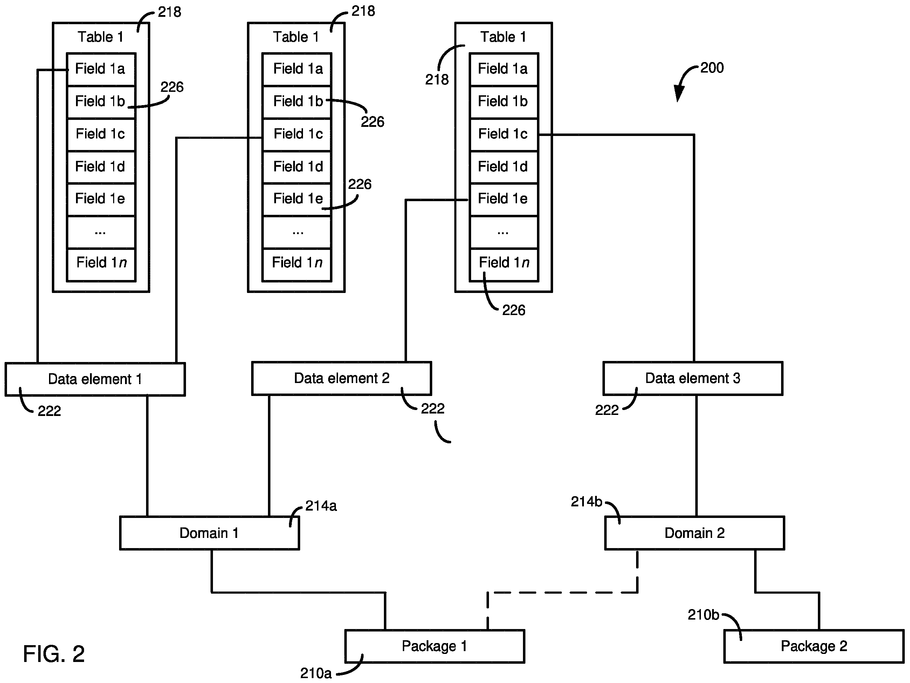

FIG. 2 is a diagram illustrating elements of a database schema 200 and how they can be interrelated. In at least some cases, the database schema 200 can be maintained other than at the database layer of a database system. That is, for example, the database schema 200 can be independent of the underlying database, including a schema used for the underlying database. Typically, the database schema 200 is mapped to a schema of the database layer (e.g., schema 100 of FIG. 1), such that records, or portions thereof (e.g., particular values of particular fields) can be retrieved through the database schema 200.

The database schema 200 can include one or more packages 210. A package 210 can represent an organizational component used to categorize or classify other elements of the schema 200. For example, the package 210 can be replicated or deployed to various database systems. The package 210 can also be used to enforce security restrictions, such as by restricting access of particular users or particular applications to particular schema elements.

A package 210 can be associated with one or more domains 214 (i.e., a particular type of semantic identifier or semantic information). In turn, a domain 214 can be associated with one or more packages 210. For instance, domain 1, 214a, is associated only with package 210a, while domain 2, 214b, is associated with package 210a and package 210b. In at least some cases, a domain 214 can specify which packages 210 may use the domain. For instance, it may be that a domain 214 associated with materials used in a manufacturing process can be used by a process-control application, but not by a human resources application. Domains can be, or can identify, a type of inherent relationship. Note that, for the present disclosure, "inherent" relationships can be either technical or semantic, provided they are definitional aspects of an object.

In at least some implementations, although multiple packages 210 can access a domain 214 (and database objects that incorporate the domain), a domain (and optionally other database objects, such as tables 218, data elements 222, and fields 226, described in more detail below) is primarily assigned to one package. Assigning a domain 214, and other database objects, to a unique package can help create logical (or semantic) relationships between database objects. In FIG. 1, an assignment of a domain 214 to a package 210 is shown as a solid line, while an access permission is shown as a dashed line. So, domain 214a is assigned to package 210a, and domain 214b is assigned to package 210b. Package 210a can access domain 214b, but package 210b cannot access domain 214a.

Note that at least certain database objects, such as tables 218, can include database objects that are associated with multiple packages. For example, a table 218, Table 1, may be assigned to package A, and have fields that are assigned to package A, package B, and package C. The use of fields assigned to packages A, B, and C in Table 1 creates a semantic relationship between package A and packages B and C, which semantic relationship can be further explained if the fields are associated with particular domains 214 (that is, the domains can provide further semantic context for database objects that are associated with an object of another package, rather than being assigned to a common package).

As will be explained in more detail, a domain 214 can represent the most granular unit from which database tables 218 or other schema elements or objects can be constructed. For instance, a domain 214 may at least be associated with a datatype. Each domain 214 is associated with a unique name or identifier, and is typically associated with a description, such as a human readable textual description (or an identifier that can be correlated with a human readable textual description) providing the semantic meaning of the domain. For instance, one domain 214 can be an integer value representing a phone number, while another domain can be an integer value representing a part number, while yet another integer domain may represent a social security number. The domain 214 thus can help provide common and consistent use (e.g., semantic meaning) across the schema 200. That is, for example, whenever a domain representing a social security number is used, the corresponding fields can be recognized as having this meaning even if the fields or data elements have different identifiers or other characteristics for different tables.

The schema 200 can include one or more data elements 222. Each data element 222 is typically associated with a single domain 214. However, multiple data elements 222 can be associated with a particular domain 214. Although not shown, multiple elements of a table 218 can be associated with the same data element 222, or can be associated with different data elements having the same domain 214. Data elements 222 can serve, among other things, to allow a domain 214 to be customized for a particular table 218. Thus, the data elements 222 can provide additional semantic information for an element of a table 218.

Tables 218 include one or more fields 226, at least a portion of which are mapped to data elements 222. The fields 226 can be mapped to a schema of a database layer, or the tables 218 can be mapped to a database layer in another manner. In any case, in some embodiments, the fields 226 are mapped to a database layer in some manner. Or, a database schema can include semantic information equivalent to elements of the schema 200, including the domains 214.

In some embodiments, one or more of the fields 226 are not mapped to a domain 214. For example, the fields 226 can be associated with primitive data components (e.g., primitive datatypes, such as integers, strings, Boolean values, character arrays, etc.), where the primitive data components do not include semantic information. Or, a database system can include one or more tables 218 that do not include any fields 226 that are associated with a domain 214. However, the disclosed technologies include a schema 200 (which can be separate from, or incorporated into, a database schema) that includes a plurality of tables 218 having at least one field 226 that is associated with a domain 214, directly or through a data element 222.

### Example 4 - Example Data Dictionary Components

Schema information, such as information associated with the schema 200 of FIG. 2, can be stored in a repository, such as a data dictionary. As discussed, in at least some cases the data dictionary is independent of, but mapped to, an underlying relational database. Such independence can allow the same database schema 200 to be mapped to different underlying databases (e.g., databases using software from different vendors, or different software versions or products from the same vendor). The data dictionary can be persisted, such as being maintained in a stored table, and can be maintained in memory, either in whole or part. An in-memory version of a data dictionary can be referred to as a dictionary buffer.

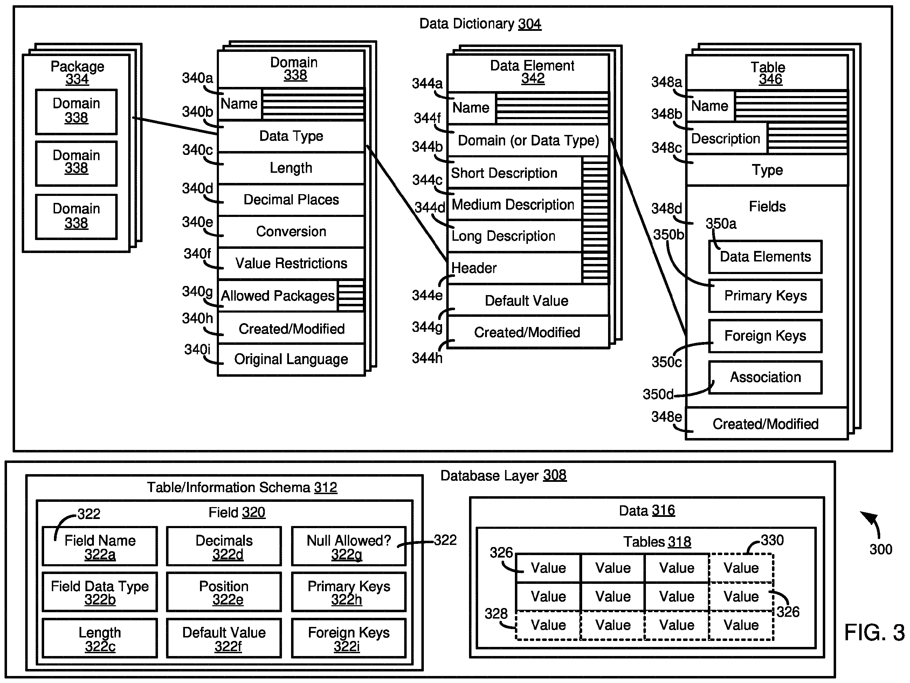

FIG. 3 illustrates a database environment 300 having a data dictionary 304 that can access, such as through a mapping, a database layer 308. The database layer 308 can include a schema 312 (e.g., an INFORMATION_SCHEMA as in PostgreSQL) and data 316, such as data associated with tables 318. The schema 312 includes various technical data items/components 322, which can be associated with a field 320, such as a field name 322a (which may or may not correspond to a readily human-understandable description of the purpose of the field, or otherwise explicitly describe the semantic meaning of values for that field), a field data type 322b (e.g., integer, varchar, string, Boolean), a length 322c (e.g., the size of a number, the length of a string, etc., allowed for values in the field), a number of decimal places 322d (optionally, for suitable datatypes, such as, for a float with length 6, specifying whether the values represent XX.XXXX or XXX.XXX), a position 322e (e.g., a position in the table where the field should be displayed, such as being the first displayed field, the second displayed field, etc.), optionally, a default value 322f (e.g., "NULL," "0," or some other value), a NULL flag 322g indicating whether NULL values are allowed for the field, a primary key flag 322h indicating whether the field is, or is used in, a primary key for the table, and a foreign key element 322i, which can indicate whether the field 320 is associated with a primary key of another table, and, optionally, an identifier of the table/field referenced by the foreign key element. A particular schema 312 can include more, fewer, or different technical data items 322 than shown in FIG. 3.

The tables 318 are associated with one or more values 326. The values 326 are typically associated with a field 320 defined using one or more of the technical data elements 322. That is, each row 328 typically represents a unique tuple or record, and each column 330 is typically associated with a definition of a particular field 320. A table 318 typically is defined as a collection of the fields 320, and is given a unique identifier.

The data dictionary 304 includes one or more packages 334, one or more domains 338, one or more data elements 342, and one or more tables 346, which can at least generally correspond to the similarly titled components 210, 214, 222, 218, respectively, of FIG. 2. As explained in the discussion of FIG. 2, a package 334 includes one or more (typically a plurality) of domains 338. Each domain 338 is defined by a plurality of domain elements 340. The domain elements 340 can include one or more names 340a. The names 340a serve to identify, in some cases uniquely, a particular domain 338. A domain 338 includes at least one unique name 340a, and may include one or more names that may or may not be unique. Names which may or may not be unique can include versions of a name, or a description, of the domain 338 at various lengths or levels of detail. For instance, names 340a can include text that can be used as a label for the domain 338, and can include short, medium, and long versions, as well as text that can be specified as a heading. Or, the names 340a can include a primary name or identifier and a short description or field label that provides human understandable semantics for the domain 338.

In at least some cases, the data dictionary 304 can store at least a portion of the names 340a in multiple languages, such as having domain labels available for multiple languages. In embodiments of the disclosed technologies, when domain information is used for identifying relationships between tables or other database elements or objects, including searching for particular values, information, such as names 340a, in multiple languages can be searched. For instance, if "customer" is specified, the German and French portion of the names 340a can be searched as well as an English version.

The domain elements 340 can also include information that is at least similar to information that can be included in the schema 312. For example, the domain elements 340 can include a data type 340b, a length 340c, and a number of decimal places 340d associated with relevant data types, which can correspond to the technical data elements 322b, 322c, 322d, respectively. The domain elements 340 can include conversion information 340e. The conversion information 340e can be used to convert (or interconvert) values entered for the domain 338 (including, optionally, as modified by a data element 342). For instance, conversion information 340e can specify that a number having the form XXXXXXXXX should be converted to XXX-XX-XXXX, or that a number should have decimals or comma separating various groups of numbers (e.g., formatting 1234567 as 1,234,567.00). In some cases, field conversion information for multiple domains 338 can be stored in a repository, such as a field catalog.

The domain elements 340 can include one or more value restrictions 340f. A value restriction 340f can specify, for example, that negative values are or are not allowed, or particular ranges or threshold of values that are acceptable for a domain 338. In some cases, an error message or similar indication can be provided as a value is attempted to be used with a domain 338 that does not comply with a value restriction 340f. A domain element 340g can specify one or more packages 334 that are allowed to use the domain 338.

A domain element 340h can specify metadata that records creation or modification events associated with a domain element 338. For instance, the domain element 340h can record the identity of a user or application that last modified the domain element 340h, and a time that the modification occurred. In some cases, the domain element 340h stores a larger history, including a complete history, of creation and modification of a domain 338.

A domain element 340i can specify an original language associated with a domain 338, including the names 340a. The domain element 340i can be useful, for example, when it is to be determined whether the names 340a should be converted to another language, or how such conversion should be accomplished.

Data elements 342 can include data element fields 344, at least some of which can be at least generally similar to domain elements 340. For example, a data element field 344a can correspond to at least a portion of the name domain element 340a, such as being (or including) a unique identifier of a particular data element 342. The field label information described with respect to the name domain element 340a is shown as separated into a short description label 344b, a medium description label 344c, a long description label 344d, and a header description 344e. As described for the name domain element 340a, the labels and header 344b-344e can be maintained in one language or in multiple languages.

A data element field 344f can specify a domain 338 that is used with the data element 342, thus incorporating the features of the domain elements 340 into the data element. Data element field 344g can represent a default value for the data element 342, and can be at least analogous to the default value 322f of the schema 312. A created/modified data element field 344h can be at least generally similar to the domain element 340h.

Tables 346 can include one or more table elements 348. At least a portion of the table elements 348 can be at least similar to domain elements 340, such as table element 348a being at least generally similar to domain element 340a, or data element field 344a. A description table element 348b can be analogous to the description and header labels described in conjunction with the domain element 340a, or the labels and header data element fields 344b-344e. A table 346 can be associated with a type using table element 348c. Example table types include transparent tables, cluster tables, and pooled tables, such as used in database products available from SAP SE of Walldorf, Germany.

Tables 346 can include one or more field table elements 348d. A field table element 348d can define a particular field of a particular database table. Each field table element 348d can include an identifier 350a of a particular data element 342 used for the field. Identifiers 350b-350d, can specify whether the field is, or is part of, a primary key for the table (identifier 350b), or has a relationship with one or more fields of another database table, such as being a foreign key (identifier 350c) or an association (identifier 350d).

A created/modified table element 348e can be at least generally similar to the domain element 340h.

### Example 5 - Example Metadata Model

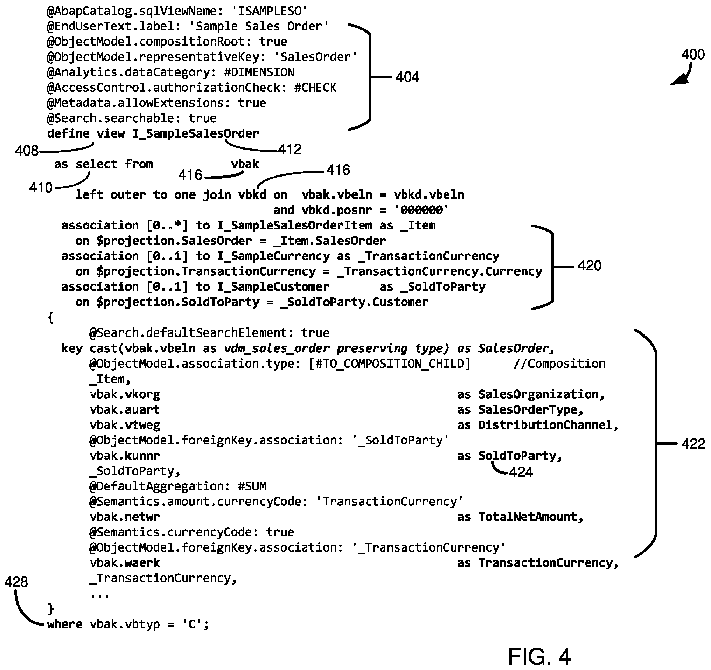

FIG. 4 illustrates a definition of a metadata model 400. The metadata model 400, in particular, represents a view, such as a Core Data Services view of SAP SE, of Walldorf, Germany. The metadata model 400 can include a variety of different components, at least some of which can be considered to be metadata models. That is, the metadata model 400 can be a model that is based at least in part on multiple sub-models. The sub-models can specify particular aspects of the overall metadata model 400.

The metadata model 400 can optionally include one or more annotations 404. An annotation can be a metadata component that can be added to a metadata model. For example, a provider may supply a base model, and individual users or customers may wish to add metadata that is specific to their operating environment and use cases. The ability to add annotations can thus enhance usability by allowing for custom metadata elements, without impacting other users of a base metadata model. Annotations can be specified for different software layers or frameworks.

In the example shown, annotations 404 can be indicated as annotations using particular syntax elements, such as by preceding an annotation with the "@" symbol. In at least some cases, annotations 404 can also be indicated by placing them in the appropriate portion of a metadata model, such as in a header section or another section designated for annotations. In some cases, annotations 404 can reference other metadata models, such as a metadata model of a data source, or can reference a data source that is associated with a metadata model. In either event, such an association 404 can create a dependency between the metadata model 400 and the other metadata model/data source.

The metadata model 400 can include instructions 408, in this case a SQL statement 410, defining a core metadata model/object having an identifier 412 (which can be used, for example to later access or activate, such as to instantiate, the metadata model). In particular, the instructions 408 shown define a view. The annotations 404 further specify properties of the view, as do other portions of the metadata model 400 that will be further described.

The instructions 408 can specify one or more data sources 416. Data sources 416 can define data to which at least a portion of the metadata of the metadata model 400 will apply, and can also supply additional metadata for the metadata model 400. Note that the metadata model 400 can be, in at least a sense, dependent on referenced data sources 416. For example, if the metadata model 400 relies on particular expected data or metadata of a data source 416, the metadata model may be unusable, have performance issues, or provide incorrect results if the referenced data sources do not include expected data or metadata, or are otherwise inconsistent with how the data source is used in the metadata model. As shown, the data sources 416 includes two tables, "vbak" and "vbkd." These tables will typically include metadata features such as one or more fields, where each field is associated with a data type, designations of a primary key, and optionally associations with other database components, such as association or foreign key relationships with other database tables.

The metadata model 400 can optionally include specifications of one or more associations 420. An association 420 can define a relationship to another entity. An association 420 can be processed during the use of the metadata model 400, such as being converted to a SQL expression such as a JOIN. Unlike other conditions or elements that are included in the metadata model 400, associations can define a relationship that can at least in some cases be optional, such as being selectively activated depending upon how the metadata model is accessed. For example, an association 420 can be converted to a JOIN condition that uses a table provided in a SELECT statement that references the metadata model 400.

The metadata model 400 can include one or more components 422 that specify how data retrieved using the metadata model should be processed, including to generate values that are associated with other metadata elements of the metadata model. Processing can include calculating values, such as using a formula specified in, or referenced by, the metadata model 400. In particular, a processing component 422 can specify that a particular field value should be treated as an element 424. Thus, the metadata model 400 can include dependencies on how elements are defined, and the metadata model 400 may not be accurate, or useable, if the element definition does not match how it is used, and intended to be used, in the metadata model 400.

The metadata model 400 can optionally include additional components, such as one or more conditions 428, or other operations, such as aggregations, unions, etc., including such operations that are typically supported by a database query language. In addition to instantiated artefacts, information about the artefacts can be stored in a persistency model, such as one or more database tables. An example persistency model that can be used with artefacts is disclosed in U.S. Patent Application No. 16/387,983, filed April 18, 2019, and incorporated by reference herein.

### Example 6 - Example Metadata Model, Including Relationships with Other Metadata Models

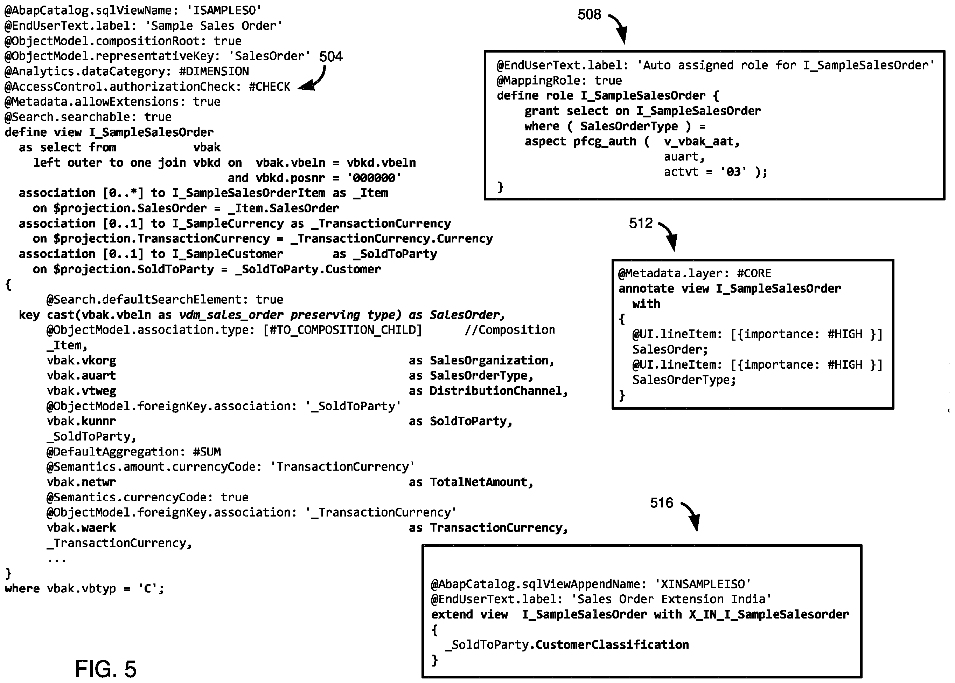

FIG. 5 illustrates how metadata models may have dependencies on other metadata models. In particular, FIG. 5 shows a view metadata model 504, which can be the metadata model 400 of FIG. 4. FIG. 5 also illustrates a metadata model 508 for an access control object (such as a DCLS, or data control language source), a metadata model 512 for a metadata extension object (such as a DDLX, or metadata extension), and a metadata model 516 for an extension element object (such as a DDLS, or data definition language source).

The access control object metadata model 508 can be used for restricting access to data that can be retrieved using the view metadata model 504. For example, the view metadata model 504 and the access control object metadata model 508 can be processed together when the view metadata model 504 is activated, such as to generate SQL commands that retrieve data for the view metadata model, but which are filtered or restricted based on the access control object metadata model. As the access control object metadata model 508 references the view metadata model 504, the access control object metadata model depends on the view existing, and on the view containing elements specified in the access control object metadata model. For example, the access control object metadata model references the "SalesOrderType" element of the view "I_SampleSalesOrder" and the authorization object "V_VBAK_AAT" with its authorization field "AUART." Thus, the first element would be undefined or unusable if the corresponding element did not exist in the view metadata model 504.

### Example 7 - Example Computing Environment Having Virtual Data Model Interacting with Database System

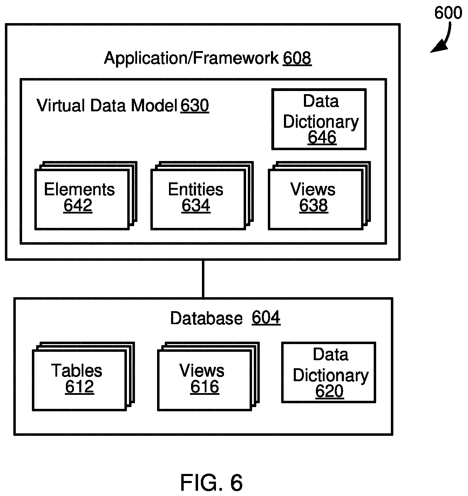

FIG. 6 illustrates an example computing environment 600 in which disclosed technologies can be implemented. At a high level, the computing environment 600 includes a database system 604 that can communicate with an application or framework layer 608. The database system 604 includes data that can be used by the application/framework layer 608, or applications that communicate with the application/framework layer. The data can be stored in one or more tables 612 of the database 608. The data can be referenced by one or more views 616, which can be view definitions or materialized views (which can then also correspond to tables 612). A data dictionary 620 can store information regarding the tables 612 and the views 616.

The application/framework layer 608 includes a virtual data model 630. The virtual data model 630 can include entities 634 and views 638, which can at least generally correspond to the tables 612 and the views 616 of the database 608. However, as has been described, as compared with the tables 612 and views 616, artefacts in the virtual data model 630 are typically associated with additional information, such as semantic information or information that can be used to manipulate data in one or more artefacts of the database 608 that corresponds to a given artefact in the virtual data model. The virtual data model 630 can include information regarding elements 642, which can correspond to attributes or fields used in the entities 634 and views 638. At least some of the elements 642 can correspond to fields used in the database 604, but are enriched with additional information. Information regarding the entities 634, views 638, and elements 642 can be stored in a data dictionary 646 of the virtual data model 630.

### Example 8 - Example Logical Data Object Schema

In any of the Examples described herein, a logical data object can be a specific example of an object in an object-oriented programming approach. However, unless the context specifically indicates otherwise, aspects of the present disclosure described with respect to logical data objects can be applied to other types of objects, or other types of data collections. For example, a database table, or a group of related tables, can have fields that are analogous to data members of an object. Functions that correspond to member functions of an object can be defined to perform operations on the tables.

A logical data object can contain a definition of a hierarchical data structure and definitions of one or more operations that can be performed using portions of the hierarchical data structure. In some cases, a logical data object may be referred to as a "business object" and can take any number of forms including business intelligence or performance management components such as those implemented in software technologies of SAP BusinessObjects, ORACLE Hyperion, IBM Cognos, and others. However, the use of logical data objects in computer applications is not limited to "business" scenarios. Logical data objects can be used to define a particular application and/or problem domain space. Aspects and artifacts of a given problem domain can be defined using the hierarchical data structure and various portions of these aspects and/or artifacts can be associated directly with definitions of relevant logical operations. A logical data object can be an artefact of a virtual data model, or can be constructed with reference to artefacts of a virtual data model. In turn, components of the virtual data model can be mapped to another data model, such as a physical data model of a relational database system.

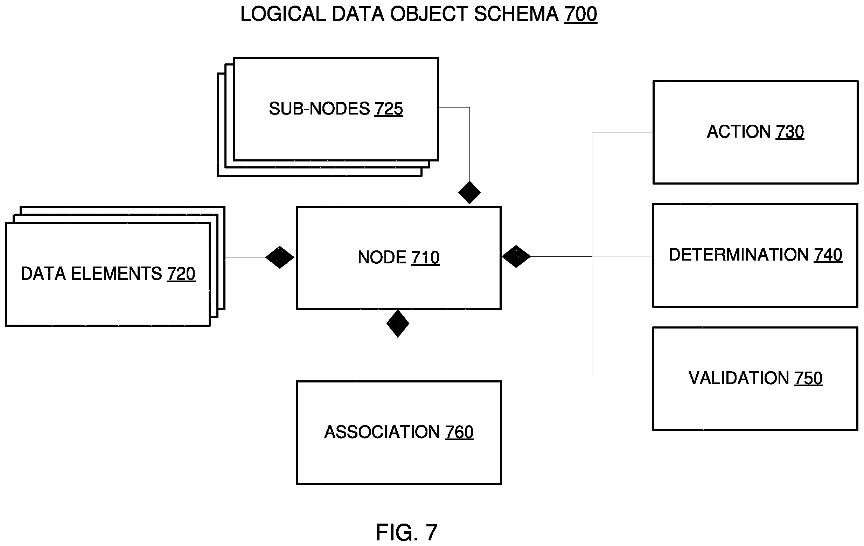

FIG. 7 is a diagram of an example logical data object schema 700. A node 710 can contain one or more data elements 720 (i.e., variables, such as data members). A data element 720 can contain an identifier, such as a name, and an associated value. The identifier can, for example, be associated with a field of a particular database table. In at least some embodiments, the data element 720 can be associated with a data type that restricts and/or validates the type of data that can be stored as a value of the data element 720.

The node 710 can contain one or more child nodes 725 (also referred to as sub-nodes), which can themselves contain additional data elements 720 (and other node components, including sub-nodes 725). Combinations of sub-nodes 725 can be used to define a hierarchical data structure of multiple nodes 710. In at least some embodiments, the hierarchical data structure can contain a root node that does not have a parent-node and can be used as an entry point for traversing the hierarchical data structure.

Each node 710 in the logical data object can be associated with one or more actions 730. An action 730 can comprise a definition for a logical operation that can be performed using the node 710 with which it is associated. The action 730 can contain an identifier that can be used to invoke the action's logical operation. Each node 710 in the logical data object can be associated with one or more determinations 740. A determination 740 can contain a definition for a logical operation that can be automatically executed when a trigger condition is fulfilled. Example trigger conditions can include a modification of the associated node 710, a modification of the data element 720 of the associated node, the creation of a data element 720 of the associated node, etc. A logical operation defined by an action 730, or a determination 740, can comprise instructions to create, update, read, and/or delete one or more data elements 720 and/or one or more sub-nodes 725. Actions 730 or determinations 740 can be set to trigger, in some cases, upon the occurrence of a particular date (e.g., a particular date or a particular time on a particular date).

Each node 710 in the logical data object schema 700 can be associated with one or more validations 750. A validation 750 can contain a definition of one or more data integrity rules and/or checks. The one or more data integrity rules and/or checks can be performed when the associated node 710, and/or one or more data elements 720 of the associated node, are created, modified, and/or deleted. Any such operation that does not satisfy the one or more data integrity rules and/or checks can be rejected.

Each node 710 in the logical data object schema 700 can be associated with one or more nodes from one or more other logical data objects (having the same schema or a different schema) by one or more associations 760. An association 760 can contain an identifier for a node in another logical data object that is associated with the node 710. Associations 760 can be used to define relationships among nodes in various logical data objects. The association 760, in at least some embodiments, contains an association type indicator that identifies a type of association between the node 710 and the node in the other logical data object.

Although the action 730 as defined and associated with the node 710, when the action 730 is invoked, it targets an identified instance of the node 710 with which it is associated. Similarly, a determination 740 and/or validation 750 can be defined and associated with a node 710, but can target an instance of the associated node 710 when it/they is/are invoked. Multiple instances of a given logical data object can be created and accessed independently of one another. Actions 730, determinations 740, or validations 750 may correspond to member functions of a data object, such as implemented in a C++ class.

Although the instances of the logical data object share a common schema 700, the data values stored in their respective node instances and data element instances can differ, as can the logical data object instances that are associated by the associations 760. Additionally, or alternatively, an instance of an association 760 can identify a particular instance of an associated node in another logical data object instance. The identifier of a node instance can be an alphanumeric string that uniquely identifies the instance and, in at least some cases, can be used to look the instance up and/or retrieve data associated with the instance. Particular examples of identifiers include numerical values and universally unique identifiers. However, other types of identifiers are also possible.

Various actions may be performed using logical data objects including create, update, delete, read, and query operations. If the requested operation is a read operation, the data payload may contain a unique identifier associated with a logical data object instance to be retrieved. Processing a read operation request can comprise searching for an instance of the logical data object that is associated with the provided unique identifier in a data store, and retrieving all or part of a matching logical data object instance's data from the data store. If the requested operation is an update operation, the data payload may contain one or more values to be assigned to data element instances of an existing logical data object instance. The data payload may also contain a unique identifier associated with the logical data object instance to be updated. Processing an update operation request can comprise searching for a logical data object instance in a data store associated with the provided unique identifier and updating the matching logical data object instance with the provided data values.

### Example 9 - Example Collect of Data Objects at Different Software Layers and Relationships Therebetween

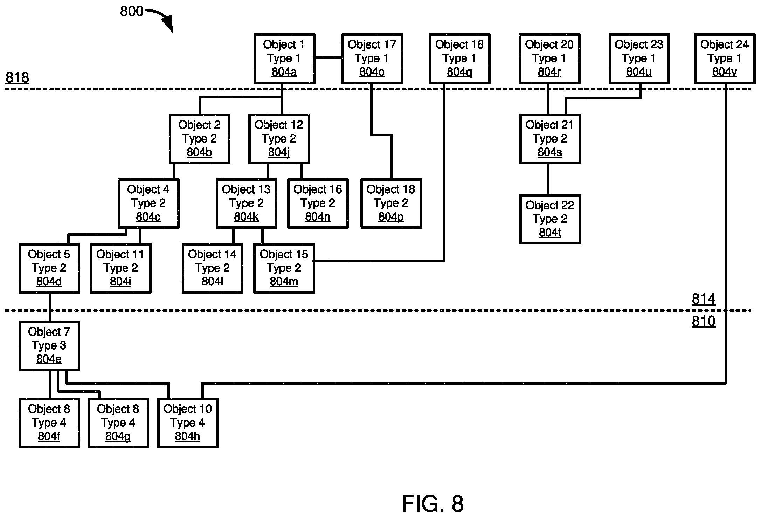

FIG. 8 illustrates a collection 800 of data objects 804 (shown as data objects 804a-804v), illustrating how data objects can be arranged in a hierarchical manner, and in different layers. In particular, the data objects 804 are arranged in a first layer 810, a second layer 814, and a third layer 818. In at least some cases, data objects 804 at higher layers may be designed for use by end users or user applications, while data objects at lower levels can be more specific, and more technical. In a particular example, the first layer 810 is a relational database layer, the second layer 814 is a virtual data model layer that refers to objects in the relational database layer, and the third layer 818 is a logical data object layer that, at least primarily, uses data objects of the virtual data model.

In some implementations, data objects of a lower-level layer, such as the first layer 810, maintain data, while data objects of other layers, such as the layers 814, 818 provide access to such data, and may transiently store a portion of retrieved data. Data objects of the first layer 810 may be optimized for data access (read, write, delete, update operations), but for a variety of reasons may be not as easy for end users to interact with. In addition, it may not be desirable to provide all users who might be interested in data from the first 810 layer with direct access to the data or the data objects.

The data objects of the second layer 814 can be somewhat more "complex" than data objects of the first layer 810, in that they can be used to help format or annotate data for use by users or applications, such as associating semantic concepts with the data, providing more meaningful names for a lower-level data object and its attributes (which can be because naming conventions of the first layer may be more limited, or because the data in the first layer is capable of a variety of uses and names and other semantic information included in the second layer 814 can be tailored towards a specific use or general subject matter area), providing details about how data should be used or displayed, or adding attributes in addition to those from any data objects referenced by the object at the second layer 814. In some cases, added attributes can be based on a calculation conducted at least in part on data retrieved from/associated with another data object.

The data objects of the third layer 818 can be even more tailored for a specific use case than data objects of the second layer 814. They may be tailored to a specific purpose of a specific entity, such as including various validations and checks for a particular process. Thus, another way to view the layers 810, 814, 818 is that lower levels serve more general purposes while higher layers serve more specific purposes. Accordingly, a particular lower-level data object can be used in multiple ways by a variety of higher-level objects.

Data objects 804 can be of various types - both between layers 810, 814, 818 and within a given layer. That is, the definition and use of logical data objects of the layer 818 can differ, significantly, from the implementation of objects in the layer 814, which in turn can vary significantly from the data objects of the layer 810, where the views and table of the layer 810 can illustrate how data objects can be of different types even within a layer.

FIG. 8 illustrates that a higher-level data object, such as data object 804a, can be related to many data objects at many levels, where data object 804a is related, directly or indirectly, to data objects 804b-804n. Data object 804a is a relatively simple example of relationships between data objects, as in practice a data object can be related to dozens or more other data objects. The data objects 804b-804n also illustrate that data objects referenced by a data object, such as a higher-level data object, can in turn relate to multiple data objects, such as data object 804c, which has a direct relationship with data objects 804d, 804i, and where a data object 804e, having a relationship with data object 804d, in turn has relationships with data objects 804f, 804g, 804h.

FIG. 8 also illustrates how multiple data objects 804 can all have a relationship to another data object. For example, both data object 804a and data object 804q have a relationship with data object 804m. Note that the example with data objects 804a, 804q, and 804m illustrates how it can be useful to track how data objects are related, as an update to data object 804m can affect both data objects 804a, 804q. Assuming that both data objects 804a and 804q are anchor data objects, the scenario also illustrates how a data object 804 can belong to multiple clusters.

Note that not all data objects 804 in FIG. 8 are related, directly or indirectly. Data objects 804r and 804u have no relationships with any of the data objects in the clusters that may be formed by designating data objects 804a, 804q as anchor data objects. Similarly, while data object 804a has a direct relationship with data object 804o, both being at the level 818, data object 804q does not have a relationship with any of the lower-level data objects associated with a cluster formed using data object 804a as an anchor data object.

Various rules can be established to help define clusters. For example, a rule may indicate that data artifacts at a particular layer, such as layer 818, serve as anchor data objects, at least for "automatic" or "default" cluster definition. Particularly if data objects 804 at a particular layer are known to have defined semantics/be used for purposes that naturally lend themselves to cluster definition, a rule can be defined that data objects at that level are not placed into clusters with one another. In this case, for example, a rule could determine that layer 818 is the source of anchor objects, and since data objects 804a and 804q are both in that layer, that the data objects will not be included in a common cluster, even though they have a relationship.

In contrast, consider the data objects 804b and 804c in the layer 814. These data objects 804 are also related, but since they are not in the layer that defines anchor data objects, they can be included in a common cluster.

Now, consider how the data objects 804 can be used to define clusters that in turn address issues noted in Example 1. In the replication scenario, it could be determined that data object 804e has been marked for replication. Assuming that data objects 804f-804h are in the same cluster as data object 804e, they can also be selected for replication. Now assume that it is desired to deploy data object 804b. Using a cluster definition, it can be determined that data object 804b is defined with respect to data objects 804c-804i, and so those data objects can be included in a deployment. Similar considerations can apply if an API is being developed to allow access to data object 804b. Or, if an API is being developed for data object 804a, it can be determined that an API should allow access to both data object 804b and data object 804j (and optionally lower-level data objects connected thereto).

### Example 10 - Example Data Object Versions and Data Object Properties

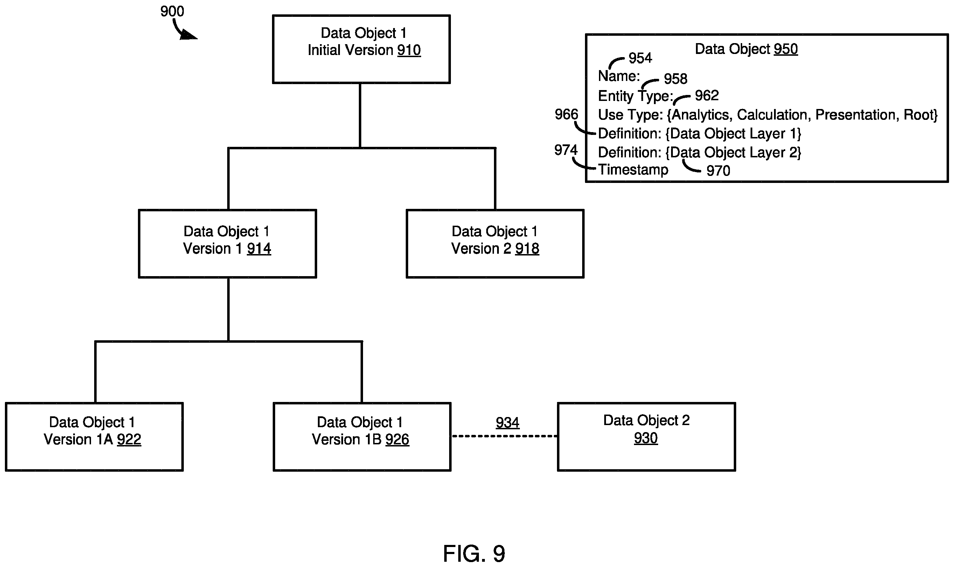

FIG. 9 illustrates additional concepts that can be relevant for cluster definition. One concept relates to data object versioning or enhancement, as indicated in a version tree 900. An initial version 910 of a data object is shown. For various reasons, the definition of the data object may change. In some cases, the definition can change without resulting in a new version. However, for a variety of reasons it is often helpful to maintain earlier versions of a data object, at least for a period of time. In this case, rather than changing the initial version 910 of the data object, a new version is created.

The version tree 900 shows a first version 914 of the data object and a second version 918 of the data object. Data objects can be annotated to indicate that they are versions of an earlier data object, or can be named using a naming convention that can be used to determine version information. Optionally, a data object can include information about a prior version of the data object it is based on.

In at least some cases, versions of a data object can themselves be versioned. For example, the first version 914 of the data object is shown as having a first version 922 and a second version 926. The versions 922, 926 of the first version 914 can be tracked independently of the initial version 910 of the data object, or can themselves be considered versions of the initial data object. For example, in some cases a system may force unbranched versioning. In this case, if the second version 918 of the data object were created after the first version 914, the second version would be considered a version of the first version of the data object.

Maintaining version information can be useful. For example, maintaining version information can help ensure all relevant data objects are included in a cluster definition. Although, if desired, some or all versions of a data object can be specified in cluster definition rules as to be included or excluded from a cluster. Having all relevant versions in a cluster can in turn help ensure that cluster use case scenarios operate correctly, such as helping to ensure that all relevant data objects are marked for replication, included in an API, marked for deployment, etc.

Consider data object 2 (930), which references the version 926 of the data object (data object 1, as shown). A link/relationship 934 between the version 926 of the first data object and the second data object 930 can be used in forming clusters. If a cluster definition process starts with the second data object 930, then the relationship 934 to the version 926 can be followed and versions of the first data object, and optionally other data objects related thereto, can be added to a cluster, or at least analyzed for addition. Additionally, the relationship 934 illustrates how it can be important to maintain version information, since the second data object 930 is related specifically to the version 926 of the first data object, not another version. If a new version of the first data object were created, it may be useful to maintain the version 926, since otherwise issues may develop if the relationship 934 is severed, or shifted to a different version of the first data object.

FIG. 9 also illustrates an example, generalized definition 950 of a data object, indicating information included in a data object that can be useful in the definition or use of clusters. The definition 950 includes a name or identifier 954 for the data object. In at least some cases, the name 954 can be used in a path or similar hierarchy designation, such as to indicate how the data object relates to one or more parent data objects. However, in other cases, a definition of a cluster can include names 954 of data objects in the cluster without including such path information.

The definition 950 also includes an entity type 958. In some cases, the entity type 958 can be used to help determine a path or level in a hierarchy. For example, it may be known that database tables are at a lower level than data objects in a virtual data model, and in turn that virtual data model objects are at a lower level than logical data objects. Even within a layer, the entity type 958 can help determine path/level information. Database tables, for example, can be thought of as being at a lower level than database views. In a virtual data model, some views can access data in a database, while other views perform calculations on such views, and yet other view types make data available to external users or processes (for example, consumption views).

Entity types 958 can also be used in processes that use or interact with clusters. For instance, knowing an entity type may assist a user or process in determining relationships to other entities, or following relationships (such as in a cluster definition process, for example, following a foreign key relationships or association). Or, knowing an entity type 958 can be used to define API methods for accessing a data object, setting up replication, or determining how a deployment should occur.

Certain types of data objects, such as data objects in a virtual data model, can have use types 962. Entity types 958 can also be associated with different uses, but a use type 962 can be helpful when a particular data object type can be used for different purposes. Information about an entity type 958 can be used in cluster formation by helping place data objects in a hierarchy. For example, a data object used for "root" access can be lowest level, a "calculation" data object can be a higher-level data object that performs calculations with respect to a root data object, an "analytics" data object can be at a yet higher level, and can perform analyses on lower level data objects, such as root and calculation data objects, while a "presentation" data object "above" analytics data object and used to determine how data should be presented to end users or user processes. In some cases, a user or user process can only access the presentation data object, and not data objects at lower levels.

In another example, a "use type" can be a service definition. For example, some data object types may be used with a particular service, while others are not. In other cases, a cluster can be used to define a use case, including a service.

Use types 962 can also be used to determine cluster definitions. For instance, a rule can be devised such that only data objects having a use type 962 of "analytics" should be included in a cluster. Or, for example, a rule can determine that data objects should only be added to a cluster if they are at the "calculation" level or higher, or at the analytics layer or lower.

A data object can have a variety of definitional elements. Definitional elements can include definitional elements 966 for a first layer, which can correspond to the layer of the data object and which are first defined in the data object. Definition elements can also include definitional element 970 that refer to a second layer, which is typically a layer lower than the layer where the data object is defined. Optionally, data objects can include definitional elements for multiple lower layers. Further, a data object can optionally include definitional elements that refer to multiple other data objects, which can be data objects at the same layer as the data object being defined, data objects at lower layers, or a combination thereof. Disclosed techniques do not exclude situations where a data object can reference a higher-level data object. However, typically lower-level data objects do not "know" about higher-level data objects, including higher-level data objects that might refer to them. A benefit of the disclosed cluster techniques is that they provide a way to identify higher-level data objects that are in a same cluster as a particular lower-level data object.

As an example of the definitional elements 966, 970, consider views in a virtual data model, such as CDS views as implemented in technologies available from SAP SE, of Walldorf, Germany. A definitional element 970 for a CDS view can be a selection of data for a lower-level data object, such as a selection of data from a database view or a database table. The selection of data can be used in a cluster definition process, in that data objects identified in the selection of data can be considered for addition to the cluster, since they are related to other data objects in the cluster.

A definitional element 966 of the CDS view can be an element that calculates a value based on data retrieved by a selection of data using the definitional element 970. Or, the definitional element 966 can be an association to another CDS view, which also can be used as a relationship that can be followed during cluster definition. Definitional elements 966 can also provide additional semantic information for data obtained from lower-level data objects, or can define how such data should be presented or define access restrictions.

The data object definition 950 can include a timestamp 974, which can indicate the date the data object was created or last updated. As will be further described, a cluster can be associated with a timestamp, and the timestamp can be used as a type of "version" information to describe different states of the cluster. In a specific example, a cluster has a timestamp that is the timestamp of the most recently created or modified (or in some cases, deleted) data object associated with the cluster.

### Example 11 - Example Cluster Definitions Based on an Example Data Object Collection

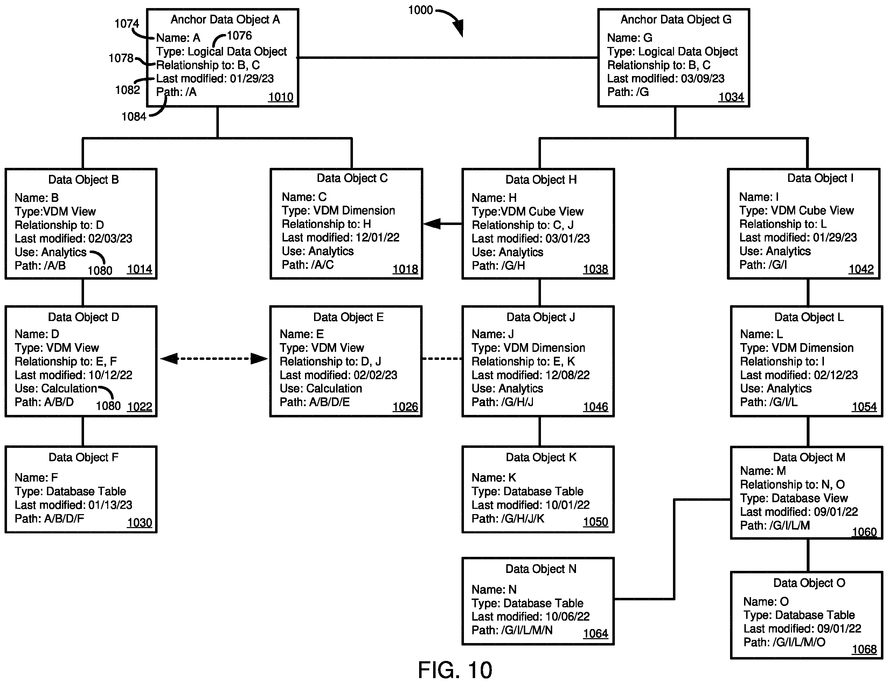

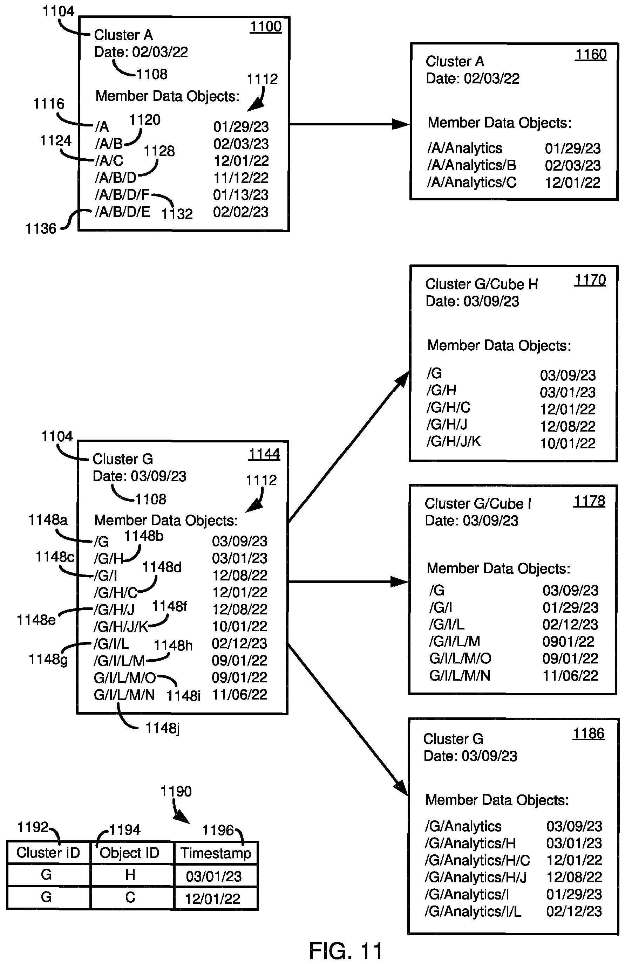

FIG. 10 provides an example data model 1000, which is used in a discussion of how clusters can be defined. FIG. 11 illustrates example cluster definitions that can be produced from the data model 1000 of FIG. 10.

The data model 1000 has a plurality of data objects 1010-1068, which can be at different layers, as previously described. A given data object can be associated with a plurality of values that can be useful in defining clusters. Taking data object 1010 as an example, the data object incudes a name 1074, a type 1076, identifiers 1078 of relationships to one or more other data objects, a date 1082 the data object was created or last modified, and path information 1084.

In some cases, information associated with the attributes 1074-1082 is included in definition of the data object, or is otherwise associated with the data object. However, information in at least certain attributes can be determined for a data object. For example, the path information 1082 can be generated by analyzing a data model that includes the relevant data objects, or can be generated by traversing the data object from a starting data object, such as using relationships identified by the identifier 1078.

A data object can include more, less, or different attributes than those shown for data object 1010. For example, data object 1030 does not have relationships to other data objects at the same or lower levels of the data model, and so it does not have a value for a relationship identifier 1078. Depending on the implementation, the data object 1030 can have a variable/attribute for a relationship identifier 1078, but the value can be left blank or can be a NULL value or other value that indicates that the data object does not have relationships other than to higher-level objects. Data objects 1014, 1022 have an attribute 1080 that provides a use scenario for the data object, which can optionally be included in cluster definition rules, as will be further explained.

In one scenario for defining clusters, data object 1010 and data object 1034 can be selected as anchor data objects for respective clusters, since they are at the top of a layer hierarchy, and thus likely to represent a broad use scenario/semantic concept. As discussed earlier, when data objects at a highest layer are selected as anchor objects, other possible anchor objects are not included in a cluster definition, even if an anchor object has some relationship, even a direct relationship (such as an association), to another possible anchor object.

Cluster definition 1100 of FIG. 11 illustrates a cluster formed using the data object 1010 as the anchor data object. The cluster definition 1100 includes a name 1104, which can be the name of the anchor data object. This convention can be particularly useful when clusters are automatically defined. Alternatively, the name 1104 can be changed by a user or another computing process, or can be manually assigned when the cluster is manually defined. If desired, another identifier can be provided for the cluster, such as a UUID.

The cluster definition 1100 includes a timestamp 1108, which can serve as a "versioning" mechanism. In a particular scenario, the timestamp 1108 is updated whenever an insert, update, or delete operation is performed with respect to data objects in the cluster. The value shown for the timestamp 1108 will be explained as the discussion proceeds. The cluster definition 1100 also includes a list 1112 of data objects in the cluster, such as including path information for member data objects. The procedure for determining such member data objects will now be described.

Taking first the definition of a cluster using data object 1010 as the anchor data object, the data object 1010 itself is part of the cluster, and so its path information and the date the data object 1010 was last modified are added to the cluster definition 1100 as an entry 1116 in the list 1112 of data objects. Data objects 1014 and 1018 are identified as being related to the data object 1010, such as using the values for attribute 1078 of the data object 1010. The relationship to data object 1014 is followed, and the path information and timestamp for the data objects 1014, 1018 are added to the list 1112 as an entry 1120. Note that the path information includes both the anchor data object 1010 and the current data object, data object 1014.

Information for data object 1018 can be added as an entry 1124 in a similar manner as for the data object 1014. Note that in this case, there is a relationship between data object 1018 and data object 1038. The relationship can be such that for cluster definition it is considered a one-way relationship, where data object 1018 will be included in a cluster for data object 1034, but data object 1038 is not included in a cluster for the data object 1010. The "one way" nature of the relationship can be determined by the relationship type or based on other considerations, such as custom rules that might be defined by a user. For example, a rule might be to not include in a cluster data objects that are in another cluster, which are not connected to the anchor data object (1010, here) directly, which exceed a threshold number of indirections from the anchor data object, or which have particular types.

Returning to data object 1014, the value of the attribute 1078 indicates that the data object is related to data object 1022. The relationship is followed, and an entry 1128 is added to the cluster definition 1100. In this case, the value for the path in the entry 1128 includes the name of the current data object, the name of the anchor data object 1010, and an identifier for the intermediate data object 1014.

The cluster definition process now looks for objects related to data object 1022. In this case, the value of the relationships attribute 1078 indicates relationships to data objects 1026 and 1030, which are added as entries 1132 and 1136 to the cluster definition 1100 in an analogous manner as the data object 1022, provided that data object 1022 is now an additional intermediate data object in the path. Data object 1030 is not related to other data objects, and so the cluster definition process terminates along that branch.

Turning to data object 1026, it has a relationship to data object 1046 but, as with data object 1018, the relationship is not such that the data object 1046 is included in the cluster definition 1100. There are no additional data objects in the tree stemming from the anchor data object 1010, and so the cluster definition process for the cluster using that anchor data object 1010 can terminate.

Cluster definition 1144 can be analogous to the cluster definition 1100, in that it includes a name 1104, a timestamp 1108, and a list 1112 of data objects in the cluster. A definition process for the cluster 1144 using data object 1034 as the anchor data object can otherwise be carried out in an analogous manner as for data object 1010. The process provides entries 1148a-1148j in the list 1112. Of note, while data objects 1038 and 1046 were not included in the cluster definition 1100, data object 1018 is included in the cluster definition 1144. Data object 1026 is not included in the cluster definition 1144, such as based on the nature of the relationship between the data objects 1026 and 1046.

Data object 1018 thus illustrates that a single data object can be a member of multiple clusters. It also illustrates that clusters can be defined using different rules, and that the nature of a relationship (or in some cases a data object type) can result in a data object that is connected to multiple anchor data objects being included in some clusters, but not other clusters.

Note that other anchor nodes or starting points can be used as starting points for cluster definition, either by default or by user or process configuration. For example, data object 1014 could be selected as a starting point or anchor data object. In some cases, selecting a data object at a higher layer may encompass too many data objects, and so using a lower-level data object as an anchor can result in more useful cluster definitions. Cluster definition rules can also be changed, such as a rule that uses data object 1014 as an anchor, but includes data object 1018 in its cluster. So, a rule can be to include data objects that have some indirect relationship (such as because both data objects 1014, 1018 are referenced by data object 1010), or that relationships should be followed "across" such relationships (as opposed to strictly higher/lower or parent/child relationships), or even that relationships should be followed "up" to a higher level (such as including data object 1010 in a cluster that is based on data object 1014 as the anchor).

FIG. 11 also illustrates clusters than can be defined using other rules. For example, as noted for FIG. 10, data objects can include an attribute 1080 that identifies a use case or scenario for a data object. A number of data objects in the data model 1010 include the use case of "analytical." So, a cluster definition could be to include an anchor data object and additional data objects (optionally subject to other rules) that are associated with the "analytical" used case.

Cluster definition 1160 is similar to cluster definition 1100, in that it uses data object 1010 as the anchor data object. However, the cluster definition 1160 only adds other data objects if they have the use case of "analytical," which limits the data objects to data objects 1014 and 1018.

FIG. 11 presents three additional cluster definitions 1170, 1178, 1186 for clusters using data object 1034 as the anchor entity. In this case, note that data object 1038 and data object 1042 both have a value for the "type" attribute 1076 of "VDM cube," indicating that the data object defines an OLAP cube in a virtual data model.

As mentioned, in some cases it can be useful to have classification rules that include fewer data objects, as this may result in a cluster of data objects with greater commonality. So, cluster definition 1170 includes only data objects that are used in data object 1038, while cluster definition 1178 only incudes data objects that are used in data object 1042.

Cluster definition 1186 is similar to cluster definition 1080, in that it only includes data objects that have the use type of "analytical." In some cases, if a data object is unambiguous, then it only need be associated with a general subject matter area, indicated by an anchor data object, and a use case (such as "analytical," or another use case, which can be specified in a definition of the data object, such as using the @ObjectModel.modelingPattern annotation as used in technologies available from SAP SE of Walldorf, Germany). For example, "concept1/analytical" sufficiently distinguishes cluster membership from "concept1/calculation." However, in some cases, such as if a data object is of a same type, this information may not be sufficient for clustering purposes. In this case, it can be useful to include an identifier of the data object, such as its name, in a cluster definition, such as in path information.

Even if a data object includes more granular path information, or a repository for data object information includes more granular path information, aggregation of data objects into clusters can occur at different levels of granularity. For instance, a cluster could be formed using all data objects associated with an overall subject matter area/anchor object, or with a particular anchor object and a particular use case. In the case of ambiguity, instance information can be included, such as whether the cluster is based on using only the cube of data object 1038 or the cube of data object 1042.

Information about cluster membership can be maintained in different ways. In one case, individual data objects are tagged with their path information. In the case where data objects having data objects 1010 as an anchor are used in a cluster, the data objects can be annotated with information such as "Nanalytics." Or, if more granularity is required, at least certain data objects can be tagged with additional information. For the scenario with the cube 1038 and the cube 1042, an annotation could be "A/analytics/H" or "A/analytics/I." In the case of a data object belonging to multiple clusters, the data object can have an annotation for each cluster, or a single annotation can allow for an array of cluster information.

Ambiguity can also be accounted for at the level of a single data object. Consider a situation where a single data artifact has multiple versions. In the case of an anchor entity, such as data object 1010, there may be a version A1, a version A2, and so on. In order to identify the appropriate data object (version) for a cluster, a cluster annotation can include the version information, such as "A/LDO Model/A1" or "A/LO Model/A2." Instances can be handled in a similar manner for lower-level data objects, such as having different versions of a particular data object representing a cube.

FIG. 11 illustrates an alternative way of maintaining cluster information such as representing a portion of the cluster definition 1100, in the form of a table 1190. The table 1190 includes a column 1192 that identifies a cluster, a column 1194 that identifies a data object in the cluster or includes more detailed path information (such as for aggregating items in a cluster in a more granular way), and a column 1196 having a timestamp for the data object, which can be used for associating a cluster with a timestamp, as described earlier.

### Example 12- Example Cluster Management Operations

Clusters can be associated with various operations, such as operations to create a cluster, operations to delete a cluster, and operations to update a cluster. Update operations can include adding data objects to, or removing data objects from, a cluster definition. Update operations can also include updating timestamps of data objects in a cluster, which can also result in an update of an overall timestamp of the cluster (since, at least in some implementations, a cluster is given a timestamp of a most recently added or modified data object of the cluster, or a timestamp associated with the removal of a data object from a cluster).

Create, update, and delete operations can be carried out manually, automatically, or a combination therefor. For example, when a data object is created, it can automatically be analyzed to determine if it should be added to any clusters, and the cluster definition and timestamp can be updated accordingly. Similar processes can take place if a data object is updated, such as adding an element/attribute to, or removing an element/attribute from, a data object, or deleted. Note that in some cases, such as in CDS views as implemented in technologies of SAP SE, of Walldorf, Germany, a "final" data object can be obtained by merging multiple data objects or code elements. For example, a data object may have a document/file/code that defines a base version of the data object.

While the base version of the data object can be changed in some cases, in other cases a user may be restricted from modifying the base version of the data object, but able to alter a final version of the data object by creating a separate document/file/code that extends the base data object, such as by adding one or more attributes to the base data object or adding elements that provide semantic information or define access or presentation logic.

When the data object is used, the base data object and the extension are merged. Since multiple computing elements are merged to create the data object, the data object can be considered to be updated if either the base definition changes, an extension changes, or if another extension is added.

An issue that can arise in cluster definitions is that clusters may have identical names. For example, assume a customer creates a cluster having a particular name, and then a software company that creates the software with which the cluster is used releases "standard" content that has the same cluster name. Or, consider two different systems of an entity being merged into a common system. These scenarios can be handled in various ways. In one way, it can be assumed that clusters with the same name refer to the same semantic context, and that a user would wish the cluster definitions to be merged. However, in some cases cluster properties, such as a semantic description of the purpose of a cluster, may be overwritten during a merge process (as opposed to data objects, which can be simply added to a collection without "overwriting" anything). In this case, it may be difficult to determine the data that should result from the merge. However, some scenarios may lend themselves to default rules (such as the software company's version "wins," or the entity's version wins) or rules/behavior can be specified on a case-by-case basis, or can simply be manually handled during a merge.

As another option, clusters with the same name can be kept separate. In one case, one cluster name can be modified to distinguish it from another cluster. In another example, namespaces can be used for at least one cluster as a mechanism. For example, there could be "customer/clustername1" or a "SAP/clustername1," where "customer" and "SAP" identify particular namespaces. Higher-level application logic can be set to use one or both of the namespaces for a particular cluster.

Merge or import operations can also be handled at more granular levels. That is, consider that a cluster exists at an entity using the software of a particular company, where the cluster includes higher-level data objects, such as an anchor data object that is a logical data object, as well as some lower-level data objects. The cluster can include only data objects of the software company, or can also include data objects of the entity or extensions made by the entity to data objects provided by the software company (where, in this scenario, consider that the entity may be allowed to extend company-provided data objects, but may not be permitted to delete the data objects or to directly modify the data objects). In this case, the software company may be allowed to add data objects to a cluster, remove data objects from a cluster, or adjust the layering within a cluster, such as by changing the relationships between the underlying data objects that are represented within the cluster. Data objects that are at a higher level, either in content developed by the entity or provided by the software company (such as data objects in another deployment package) can be left unaltered.

However, in the case of removed data objects, it could be that the entity had created an extension of a removed data object, in which case the extension may simply be deleted, marked as a "dangling" reference, or simply ignored from the point of view of the cluster. Otherwise, as discussed above, an import or merge process can trigger a cluster analysis process, where the cluster is redefined. Typically, as these types of processes involve update, delete, or insert operations, the cluster will have a timestamp associated with the import/merge (where the timestamp is later updated as described above).

Cluster information can be defined and sent with cluster data objects, if desired, according to one scenario. In another scenario, cluster definition can be performed by a system receiving data objects. These approaches can optionally be combined, where a receiving system augments existing cluster information with cluster information received along with particular data objects.

### Example 13- Example Cluster Use Cases

As mentioned in Example 1, clustering information can be useful for a variety of purposes, including deployment of data objects, definitions of replication scenarios, and definitions of APIs. It has been discussed how clusters can be added, updated, or deleted. Actions taken in response to these changes can be taken manually, or at least some actions may be performed automatically.

For example, if a cluster is modified to add data objects or update data objects, the added or updated data objects can optionally be added to a replication scenario, deployed, or included in an API definition. Or, an alert can be provided to a user to consider whether such actions should be taken in response to a changed cluster definition.

### Example 14 - Example Cluster Definition

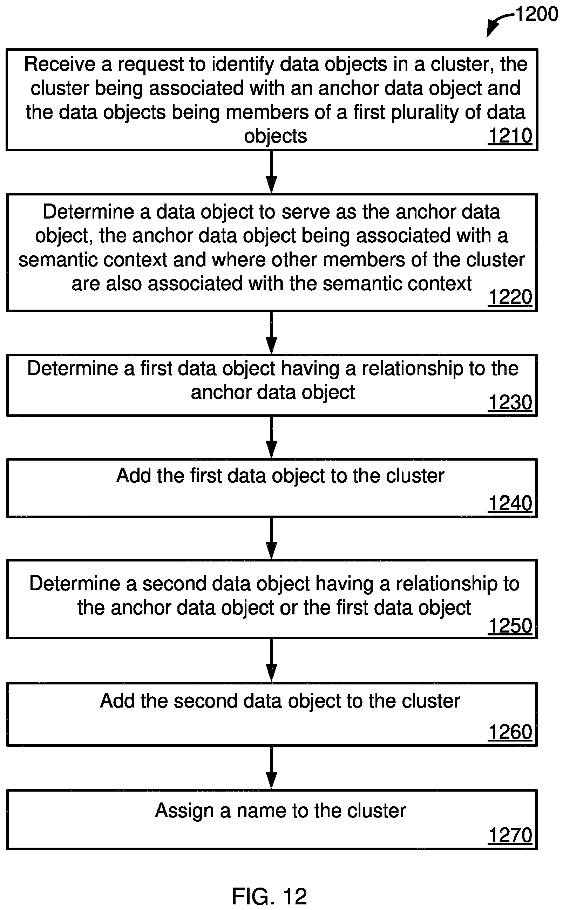

FIG. 12 illustrates an example process 1200 for defining a cluster. At 1210, a request is received to identify data objects in a cluster. The cluster is associated with an anchor data object. The data objects are members of a first plurality of data objects.

A data object to serve as the anchor data object is determined at 1220. The anchor data object is associated with a semantic context. Other members of the cluster are also associated with the semantic context.

At 1230, a first data object is determined that has a relationship to the anchor data object. The first data object is added to the cluster at 1240. At 1250, a second data object having a relationship to the anchor data object or the first data object is determined. The second data object is added to the cluster at 1260. A name is assigned to the cluster at 1270.

### Example 15 - Computing Systems

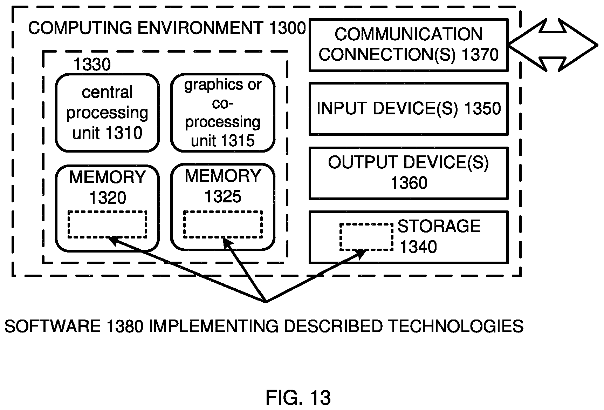

FIG. 13 depicts a generalized example of a suitable computing system 1300 in which the described innovations may be implemented. The computing system 1300 is not intended to suggest any limitation as to scope of use or functionality of the present disclosure, as the innovations may be implemented in diverse general-purpose or special-purpose computing systems.

With reference to FIG. 13, the computing system 1300 includes one or more processing units 1310, 1315 and memory 1320, 1325. In FIG. 13, this basic configuration 1330 is included within a dashed line. The processing units 1310, 1315 execute computer-executable instructions, such as for implementing components of the environment 100 of FIG. 1, including as described in Examples 1-16. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 13 shows a central processing unit 1310 as well as a graphics processing unit or co-processing unit 1315. The tangible memory 1320, 1325 may be volatile memory (e.g., registers, cache, RAM), non-volatile memory (e.g., ROM, EEPROM, flash memory, etc.), or some combination of the two, accessible by the processing unit(s) 1310, 1315. The memory 1320, 1325 stores software 1380 implementing one or more innovations described herein, in the form of computer-executable instructions suitable for execution by the processing unit(s) 1310, 1315.

A computing system 1300 may have additional features. For example, the computing system 1300 includes storage 1340, one or more input devices 1350, one or more output devices 1360, and one or more communication connections 1370. An interconnection mechanism (not shown) such as a bus, controller, or network interconnects the components of the computing system 1300. Typically, operating system software (not shown) provides an operating environment for other software executing in the computing system 1300, and coordinates activities of the components of the computing system 1300.

The tangible storage 1340 may be removable or non-removable, and includes magnetic disks, magnetic tapes or cassettes, CD-ROMs, DVDs, or any other medium which can be used to store information in a non-transitory way, and which can be accessed within the computing system 1300. The storage 1340 stores instructions for the software 1380 implementing one or more innovations described herein.

The input device(s) 1350 may be a touch input device such as a keyboard, mouse, pen, or trackball, a voice input device, a scanning device, or another device that provides input to the computing system 1300. The output device(s) 1360 may be a display, printer, speaker, CD-writer, or another device that provides output from the computing system 1300.

The communication connection(s) 1370 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 16 - Cloud Computing Environment

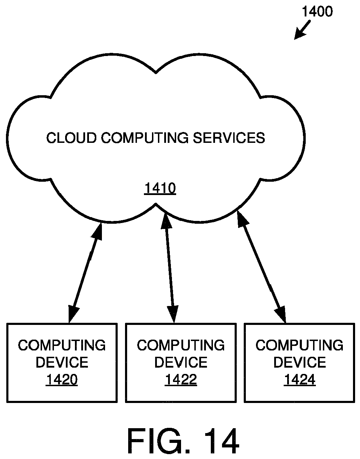

FIG. 14 depicts an example cloud computing environment 1400 in which the described technologies can be implemented. The cloud computing environment 1400 comprises cloud computing services 1410. The cloud computing services 1410 can comprise various types of cloud computing resources, such as computer servers, data storage repositories, networking resources, etc. The cloud computing services 1410 can be centrally located (e.g., provided by a data center of a business or organization) or distributed (e.g., provided by various computing resources located at different locations, such as different data centers and/or located in different cities or countries).

The cloud computing services 1410 are utilized by various types of computing devices (e.g., client computing devices), such as computing devices 1420, 1422, and 1424. For example, the computing devices (e.g., 1420, 1422, and 1424) can be computers (e.g., desktop or laptop computers), mobile devices (e.g., tablet computers or smart phones), or other types of computing devices. For example, the computing devices (e.g., 1420, 1422, and 1424) can utilize the cloud computing services 1410 to perform computing operators (e.g., data processing, data storage, and the like).

### Example 17 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 13, computer-readable storage media include memory 1320 and 1325, and storage 1340. The term computer-readable storage media does not include signals and carrier waves. In addition, the term computer-readable storage media does not include communication connections (e.g., 1370).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one hardware processor;
at least one memory coupled to the at least one hardware processor; and
one or more computer readable storage media storing computer-executable instructions that, when executed, cause the computing system to perform operations comprising:
receiving a request to identify data objects in a cluster, the cluster being associated with an anchor data object and the data objects being members of a first plurality of data obj ects;
determining a first data object to serve as the anchor data object, the anchor data object being associated with a semantic context and where other members of the cluster are also associated with the semantic context;
determining a second data object, different than the first data object, having a relationship to the anchor data object;
adding the second data object to the cluster;
determining a third data object having the relationship to the anchor data object or the second data object;
adding the third data object to the cluster; and
assigning a name to the cluster.

2. The computing system of claim 1, wherein the first plurality of data objects are defined in a plurality of software layers and the anchor data object is located at a highest layer of the plurality of software layers.

3. The computing system of claim 2, wherein the anchor data object is an only data object in the cluster from the highest layer of the plurality of software layers, and/or
wherein the cluster is a first cluster, and a second cluster comprises a fourth data object that is also a member of the first cluster, where the fourth data object is the second data object, the third data object, or is a data object other than the first data object, the second data object, and the third data obj ect.

4. The computing system of any one of claims 1 to 3, wherein the second data object is not directly related to the third data object, and/or
wherein the second data object has the relationship with the third data object and the third data object is analyzed for inclusion in the cluster based at least in part on the relationship.

5. The computing system of any one of claims 1 to 4, wherein the cluster is associated with a cluster identifier, the cluster identifier comprising the name and a use case, the operations further comprising:
adding the identifier to the anchor data object;
adding the identifier to the second data object; and
adding the identifier to the third data object.

6. The computing system of any one of claims 1 to 4, wherein the cluster is associated with a cluster identifier and a cluster definition is stored outside of any data object in the cluster, the cluster definition comprising an identifier of the cluster and identifiers of data objects in the cluster.

7. The computing system of any one of claims 1 to 6, wherein the anchor data object, the second data object, and the third data object are associated with respective timestamps, the operations further comprising:
identifying a most recent timestamp associated with data objects in the cluster; and
assigning the most recent timestamp to the cluster.

8. The computing system of any one of claims 1 to 7, the operations further comprising:
analyzing a second plurality of data objects of the first plurality of data objects for membership in the cluster, wherein the second plurality of data objects comprises all or a portion of the first plurality of data objects, the analyzing comprising determining whether a given data object of the second plurality of data objects is associated with a specified use case; and
not adding the given data object to the cluster if the given data object is not associated with the specified use case.

9. The computing system of any one of claims 1 to 8, wherein the relationship comprises an association between the second data object and the third data object or a selection of data from a second data artifact to be included in the second data object, and/or
wherein data objects of the first plurality of data objects comprises one or more of logical data objects, views or other data objects in a virtual data model, or database tables or database views.

10. The computing system of any one of claims 1 to 9, the operations further comprising:
receiving user input defining the anchor data object or receiving user input specifying a data object of the first plurality of data objects to be added to the cluster, and/or
the operations further comprising:
defining a deployment operation based at least in part on the cluster.

11. The computing system of any one of claims 1 to 10, the operations further comprising:
defining a replication operation based at least in part on the cluster, and/or
the operations further comprising:
defining an API to provide access to a plurality of data objects of the first plurality of data objects based at least in part on the cluster.

12. The computing system of any one of claims 1 to 11, wherein the anchor data object comprises an identifier identifying the anchor data object as the anchor data object for the cluster.

13. The computing system of any one of claims 1 to 12, wherein a definition of the cluster comprises an identifier identifying the anchor data object for the cluster.

14. One or more computer-readable storage media comprising:
computer-executable instructions that, when executed by a computing system comprising at least one hardware processor and at least one memory coupled to the at least one hardware processor, cause the computing system to receive a request to identify data objects in a cluster, the cluster being associated with an anchor data object and the data objects being members of a first plurality of data objects;
computer-executable instructions that, when executed by the computing system, cause the computing system to determine a first data object to serve as the anchor data object, the anchor data object being associated with a semantic context and where other members of the cluster are also associated with the semantic context;
computer-executable instructions that, when executed by the computing system, cause the computing system to determine a second data object having a relationship to the anchor data object;
computer-executable instructions that, when executed by the computing system, cause the computing system to add the second data object to the cluster;
computer-executable instructions that, when executed by the computing system, cause the computing system to determine a third data object having a relationship to the anchor data object or the first second object;
computer-executable instructions that, when executed by the computing system, cause the computing system to add the third data object to the cluster; and
computer-executable instructions that, when executed by the computing system, cause the computing system to assign a name to the cluster.

15. A method, implemented in a computing environment comprising a computing system comprising at least one hardware processor and at least one memory coupled to the at least one hardware processor, the method comprising:
receiving a request to identify data objects in a cluster, the cluster being associated with an anchor data object and the data objects being members of a first plurality of data obj ects;
determining a first data object to serve as the anchor data object, the anchor data object being associated with a semantic context and where other members of the cluster are also associated with the semantic context;
determining a second data object having a relationship to the anchor data object; adding the second data object to the cluster;
determining a third data object having a relationship to the anchor data object or the second data object;
adding the third data object to the cluster; and
assigning a name to the cluster.
